# EUROPÄISCHE PATENTANMELDUNG

(11) **EP 1 972 493 A1**
(43) Veröffentlichungstag der Anmeldung: **24.09.2008**
(21) Anmeldenummer: 08005359.8
(22) Anmeldetag: 20.03.2008
(51) Int. Cl.: B60P 3/079, B60P 3/06

(54) **Kettenfahrzeug mit Verzurrpunkten**

(30) Priorität: 22.03.2007 DE 202007004218 U
(71) Anmelder: Rheinmetall Landsysteme GmbH, 24107 Kiel (DE)
(72) Erfinder: Freier, Christian, 24111 Kiel (DE)
(74) Vertreter: Dietrich, Barbara

(57) **Zusammenfassung**

Vorgeschlagen wird, dass für den Transport des Fahrzeuges (10) seitliche Verzurrpunkte (2) nachrüstbar mittelbar oder unmittelbar am Fahrzeug (10) definiert angebracht werden. Dieses können Anschlagösen, Anschlagbügel, Haken oder dergleichen sein, die an vorhandenen Halterungen / Konsolen oder direkt an die Wannenseitenwand angebracht werden können. Alternativ können angepasste Konstruktionen vorgesehen werden, wie das Anbringen mehrer Einzelbleche, die schräg in Hauptzugrichtung geneigt, angebracht werden.

## Beschreibung

Die Lösung betrifft insbesondere eine Nachrüstbarkeit für seitliche Verzurrpunkte für den Transport von Fahrzeugen wie beispielsweise schwere Kettenfahrzeuge.

Für die seitliche Verzurrung insbesondere schwerer Kettenfahrzeuge werden die Tragarme oder ähnliche Bauteile mit Verzurrketten undefiniert umschlungen und am Laderaumboden verankert.

Hier stellt sich die Lösung die Aufgabe, das Fahrzeug definiert verzurren zu können.

Gelöst wird die Aufgabe durch die Merkmale des Patentanspruchs 1. Vorteilhafte Ausführungen sind in den Unteransprüchen aufgezeigt.

Aus der DE 8117312 U1 ist eine Anschlussvorrichtung zum Befestigen von Anschlag- oder Verzurrmitteln an zu transportierenden oder zu verzurrenden Gegenständen wie Maschinen oder Fahrzeugen bekannt.

Eine Anschlagöse zur Aufnahme von Anschlag- oder Zurrmitteln an Transportgütern oder als Festpunkt an Transportmitteln, wie Fahrzeugen, wird mit der DE 8435221 U1 publiziert.

Der eigenen Lösung liegt die Idee zugrunde, definierte Verzurrpunkte durch Einbindung von derartigen Anschlagösen, Anschlagbügel, Haken oder dergleichen oder als angepasste Konstruktion an vorhandenen Halterungen / Konsolen oder direkt an die Wannenseitenwand anzubringen.

Für die seitliche Verzurrung können Bauteile für die direkte (mittelbare) Anbringung wie Haken oder Kettendurchführungen, oder für die unmittelbare Verbindung, wie beispielsweise Schäkel et cetera, verwendet werden. Diese können durch Verschraubung oder Verschweißung am Fahrzeug auch nachträglich befestigt werden. Neben den erwähnten Ösenkonstruktionen kann eine konstruktive Alternative (auch in Kombination) die Anbringung mehrer Einzelbleche sein, die schräg in Hauptzugrichtung geneigt an Stützrollenblöcken, EAD-Halterungen, Aufnahmen für Kegelstumpffedern et cetera des Kettenfahrzeuges angeordnet sind.

Die konkrete Dimensionierung der Anschlagpunkte kann je nach Fahrzeug und benötigter maximalen Kettenlast erfolgen.

Durch den Gebrauch von definiert am Fahrzeug verteilten Anschlagösen et cetera für den Transport wird eine Erhöhung der Sicherheit beim Transport erreicht. Die seitliche Verzurrung wird nunmehr mittels einfacher Maßnahmen durchgeführt.

Anhand eines Ausführungsbeispiels mit Zeichnung soll die Lösung näher erläutert werden. Es zeigt:
- Fig. 1: ein auf einem Transport zu verzurrendes Fahrzeug mit Anschlagpunkten,
- Fig. 2: eine vergrößerte Darstellung verschiedener Ösenkonstruktion als Anschlagpunkte.

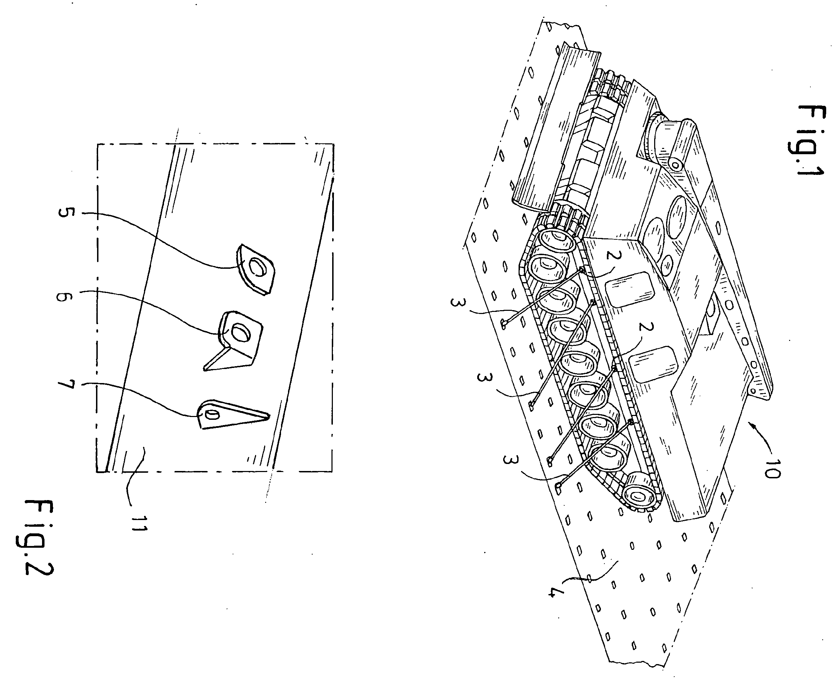

In Fig. 1 ist ein Fahrzeug 10 mit seitlich nachrüstbaren Teilen 1 als Anschlag- bzw. Verzurrpunkte 2 für das Verzurren mittels Ketten 3 oder dergleichen des Fahrzeuges 10 auf einem Boden 4 eines Transportgerätes (Schiff, Bahn, Schwerlaster et cetera) dargestellt. Diese anschraub- oder anschweißbaren Teile 1 können neben Haken et cetera auch Anschlagbügel oder Anschweissringe sein.

Fig. 2 zeigt verschiedene Ösenkonstruktionen 5, 6, 7, die an der Fahrzeugwanne 11 des Fahrzeuges 10 direkt anbringbar sind. Hier bietet sich ein Anschweißen der Ösen 5 - 7 an der Fahrzeugwanne 11 an.

## Patentansprüche

1. Kettenfahrzeug, **dadurch gekennzeichnet, dass** für den Transport des Fahrzeuges (10) seitliche Verzurrpunkte (2) nachrüstbar mittelbar oder unmittelbar am Fahrzeug (10) definiert angebracht werden.

2. Kettenfahrzeug nach Anspruch 1, **dadurch gekennzeichnet, dass** die seitlichen Verzurrpunkte (2) Anschlagösen, Anschlagbügel, Haken oder dergleichen sind, die an vorhandenen Halterungen / Konsolen oder direkt an die Wannenseitenwand angebracht werden können.

3. Kettenfahrzeug nach Anspruch 1, **dadurch gekennzeichnet, dass** die seitlichen Verzurrpunkte (2) angepasste Konstruktionen, wie die Anbringung mehrer Einzelbleche, sind, die schräg in Hauptzugrichtung geneigt an vorhandenen Halterungen / Konsolen oder direkt an die Wannenseitenwand angebracht werden können.
